# FASCICULE DE BREVET EUROPEEN

(11) **EP 2 099 006 B1**
(45) Date de publication et mention de la délivrance du brevet: **29.08.2018**
(21) Numéro de dépôt: 09154218.3
(22) Date de dépôt: 03.03.2009
(51) Int. Cl.: G08C 17/02, H04L 12/12

(54) **PROCÉDÉ DE FONCTIONNEMENT D'UN NOEUD DE COMMUNICATION D'UNE INSTALLATION DOMOTIQUE.**
FUNKTIONSVERFAHREN EINES KOMMUNIKATIONSKNOTENS EINER HEIMANLAGE
OPERATING METHOD FOR A COMMUNICATION NODE OF A HOME-AUTOMATION INSTALLATION

(30) Priorité: 05.03.2008 FR 0801205
(43) Date de publication de la demande: 09.09.2009
(73) Titulaire: SOMFY ACTIVITES SA, 74300 Cluses (FR)
(72) Inventeur: Augustin, Barbara, 74950 Scionzier (FR); Pellarin, Florent, 74370 Saint Martin Bellevue (FR)
(74) Mandataire: Bugnion Genève

(56) Documents cités:
- EP-A- 1 881 301
- US-A1- 2006 087 981
- NIYATO D ET AL: "Wireless sensor networks with energy harvesting technologies: a game-theoretic approach to optimal energy management" IEEE WIRELESS COMMUNICATIONS, IEEE SERVICE CENTER, PISCATAWAY, NJ, US, vol. 14, no. 4, 1 août 2007 (2007-08-01), pages 90-96, XP011191783 ISSN: 1536-1284

## Description

L'invention concerne le domaine des communications dans un réseau domotique comprenant une pluralité de noeuds devant communiquer les uns avec les autres. Elle porte sur un procédé de fonctionnement d'un noeud de communication, sur des noeuds mettant en oeuvre un tel procédé ainsi que sur un réseau comprenant de tels noeuds. L'invention se rapporte enfin à un support de données comprenant des moyens logiciels de mise en oeuvre d'un tel procédé de fonctionnement.

Ces noeuds correspondent généralement à des équipements électriques domotiques tels que des actionneurs, des commandes de charges électriques, des automatismes de commande tels que des capteurs ou points de commande à distance. Ces noeuds comprennent des émetteurs et/ou des récepteurs d'ordres. En particulier dans des réseaux domotiques sans fil dans lesquels la communication se fait par média électromagnétique (ondes radiofréquences par exemple), ils comprennent des émetteurs et/ou des récepteurs d'ordres sans fil.

L'invention s'applique en particulier à un noeud dit autonome, c'est-à-dire comprenant sa propre source d'énergie. Cette source d'énergie peut être une batterie. Du fait de cette autonomie, il est nécessaire de garantir une consommation minimale pour économiser les ressources limitées.

La problématique de réduction de consommation pour des équipements alimentés par le secteur est également à considérer. En particulier, la consommation de veille de ces équipements, c'est-à-dire la consommation liée uniquement à un état de veille, par exemple dans l'attente d'une information ou d'un ordre de commande, gagne à être réduite.

Par ailleurs, il peut s'avérer utile, selon les fonctions assurées par les noeuds, de pouvoir joindre de manière impromptue un noeud autonome ou à consommation réduite en veille.
Divers documents de l'état de la technique renseignent sur différentes méthodes visant à réduire la consommation globale d'un sous-ensemble d'un réseau domotique comprenant une partie émettrice et une partie réceptrice, c'est-à-dire principalement la consommation de la partie réceptrice, notamment dans un état de veille.

Dans un fonctionnement classique, la partie réceptrice, si elle est laissée en écoute permanente d'un éventuel message, consomme une grande partie des ressources énergétiques.
Une première solution consiste à alterner des phases de veille et des phases de réveil de cette partie réceptrice, calculés de sorte que le récepteur puisse intercepter un message qui lui serait adressé.
Une deuxième solution consiste à prévoir un dispositif de réveil à faible consommation, permettant de rendre la partie réceptrice sensible à un signal de réveil. Lorsqu'un tel signal est identifié, le dispositif de réveil déclenche un réveil total de la partie réceptrice en vue de traiter le signal complet. Après un intervalle de temps donné, la partie réceptrice se rendort. De tels dispositifs sont décrits dans les documents US 5,790,946, EP 0 317 007 ou US 2006/0087981. La demande de brevet WO 2006/006116 concerne une solution alternative, dans laquelle un récepteur est activé à une fréquence donnée et informe un émetteur de cette fréquence. Ainsi, l'émetteur et le récepteur peuvent se synchroniser pour communiquer à intervalles donnés. Dans une telle synchronisation horaire, largement utilisée dans de nombreux systèmes de communication nécessitant une consommation très faible, le récepteur n'est donc joignable qu'au moment des échanges prévus.

La demande de brevet US 2004/0077383 décrit un système de communication bidirectionnelle sans fil entre deux équipements autonomes. Le premier émet à l'attention du deuxième des messages d'événements, qui lui signalent qu'il peut venir collecter des informations. Une solution pour joindre un des premiers équipements consiste à prévoir un temps d'écoute fixe au niveau du premier équipement suite à l'émission du message d'événement en attente d'une réponse de la part du deuxième équipement.

Dans le cadre des systèmes de communication bidirectionnels, chaque noeud de communication est à la fois récepteur et émetteur. Dans un système domotique, des points de commande ou des capteurs envoient une certaine quantité d'information à un noeud associé à un actionneur, celui-ci prenant éventuellement en compte ces informations pour agir. Ces informations prennent la forme de mesures, d'ordres ou de signalisation d'un événement. Elles peuvent être émises de manière régulière ou sans régularité, par exemple sur apparition d'un événement détecté par le capteur. La mission principale de ces noeuds de communication est de fournir de l'information, non d'en recevoir, et ceci reste vrai s'ils comprennent une fonction de réception. Ces noeuds ont donc un fonctionnement principal en tant que noeuds maîtres. Un noeud de communication associé à un actionneur émet, suite à une information reçue, un message de retour confirmant notamment qu'il a bien reçu l'information. Si l'information provient d'un point de commande, et correspond par exemple à un ordre de commande suite à une action d'un utilisateur, le message de retour d'information informe le point de commande de la prise en compte de l'ordre reçu et/ou du changement d'état éventuel du dispositif commandé. Consécutivement, un affichage approprié peut être mis en place pour une information à l'utilisateur. Ce sont donc les capteurs et points de commande qui prennent l'initiative de la communication et fournissent principalement l'information. Alternativement, le noeud correspondant à l'actionneur a pour mission principale d'exécuter des actions en fonction des ordres ou de l'information reçus. Ces noeuds ont donc un fonctionnement principal en tant que noeuds esclaves.

Pour des raisons d'économies d'énergie, la partie réceptrice des noeuds maîtres est active très brièvement. S'il est nécessaire de joindre ces noeuds, une option consiste à exécuter une action physique sur ceux-ci pour réveiller leur partie réceptrice. Or, les capteurs notamment peuvent être placés dans des endroits difficiles d'accès et donc une telle action se révèle compliquée. La mise en oeuvre de certaines des solutions présentées précédemment peut également être applicable mais ces solutions ne sont pas complètement satisfaisantes, notamment du point de vue de l'autonomie.

Le but de l'invention est de fournir un procédé de fonctionnement remédiant à ces inconvénients et améliorant les procédés de fonctionnement connus de l'art antérieur. En particulier, l'invention se propose d'améliorer les systèmes de communication existants, de manière à réduire au maximum la consommation d'énergie des noeuds autonomes, c'est-à-dire disposant de leur source propre et fournissant de l'information au système domotique. Néanmoins, l'invention permet de joindre à distance une partie réceptrice d'un noeud alors même que l'activité de cette partie réceptrice est réduite au minimum nécessaire pour chaque communication.

Le procédé de fonctionnement selon l'invention est défini par la revendication 1.

Différents modes d'exécution du procédé sont définis par les revendications 2 à 10.

Selon l'invention, le support de données est défini par la revendication 11.

Selon l'invention, le noeud de communication est défini par la revendication 12.

Différents modes de réalisation du noeud de communication sont définis par les revendications 12 à 14.

Selon l'invention, l'installation domotique est définie par la revendication 15.

Le dessin annexé représente, à titre d'exemple, des modes d'exécution du procédé de fonctionnement selon l'invention et un mode de réalisation d'un réseau domotique mettant en oeuvre le procédé de communication selon l'invention.
La figure 1 est un schéma d'un mode de réalisation d'un réseau domotique selon l'invention.
La figure 2 est un schéma représentant le principe du procédé de fonctionnement d'un noeud de communication selon l'invention.

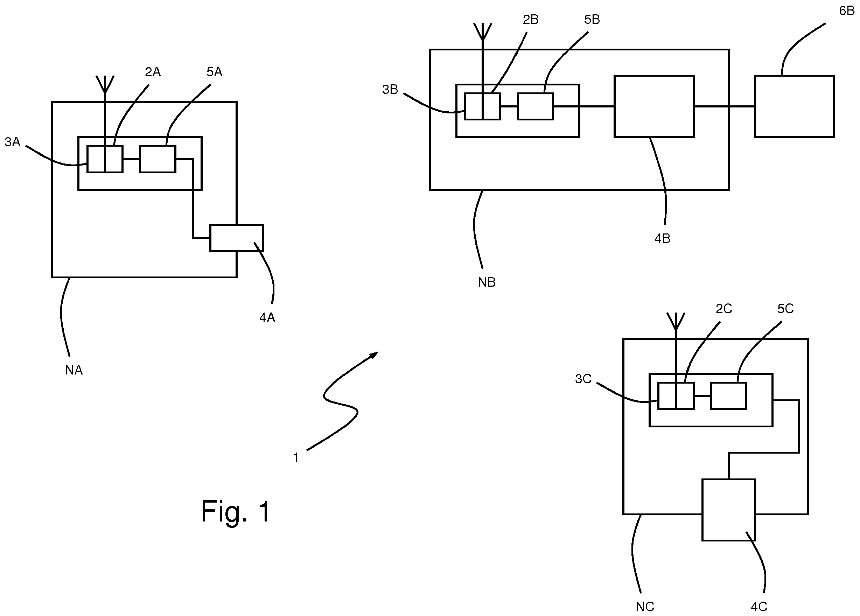

Le réseau domotique 1, représenté à la figure 1, comprend principalement un premier noeud NA, un deuxième noeud NB et un troisième noeud NC. Les noeuds sont destinés à communiquer entre eux ainsi qu'avec d'autres noeuds du réseau. Ils comprennent chacun une partie émettrice 2A, 2B, 2C pour émettre des signaux et une partie réceptrice 3A, 3B, 3C. La communication est par exemple assurée par un média sans fil tel que des ondes électromagnétiques et, notamment des ondes radioélectriques. Dans ce cas, les noeuds comprennent des antennes d'émission et de réception de signaux. Par exemple, le premier noeud NA correspond à un capteur mesurant et/ou évaluant un paramètre ambiant. Il comprend pour cela une sonde 4A. Le deuxième noeud NB correspond à un équipement domotique tel qu'un actionneur comprenant un motoréducteur 4B pilotant le déplacement d'un élément mobile comme un store 6B. Les signaux émis par le premier noeud de communication NA ou le troisième noeud de communication NC et reçus par le deuxième noeud de communication NB sont des ordres de commande d'un équipement ou des messages d'information relatifs au paramètre ambiant (par exemple "vent présent", "soleil absent", "seuil dépassé", "mesure de vent = xxx") destinés à l'équipement. En retour, les signaux émis par le deuxième noeud et reçus par le premier noeud sont majoritairement des accusés de réception et/ou des accusés d'exécution.

Le troisième noeud NC correspond à une télécommande bidirectionnelle. Ce noeud NC comprend une interface homme machine 4C permettant à un utilisateur de donner des ordres d'exécution à l'équipement domotique. Ce troisième noeud peut également être utilisé dans la commande ou la configuration des autres noeuds.

Chaque noeud comprend, en connexion avec les parties émettrices et réceptrices, une unité logique de traitement 5A, 5B, 5C. Ces ou certaines de ces unités logiques de traitement peuvent comprendre des moyens d'activation et de désactivation des parties réceptrices. Elles peuvent aussi comprendre des moyens de déclenchement d'émissions par les parties émettrices. Ces unités logiques de traitement comprennent des moyens matériels et/ou logiciels de définition d'un fonctionnement des noeuds conforme au procédé de fonctionnement selon l'invention. En particulier, les unités logiques de traitement comprennent des moyens logiciels de mise en oeuvre des étapes essentielles du procédé de fonctionnement selon l'invention. Elles comprennent notamment des moyens régissant le fonctionnement des noeuds de commande selon un premier mode de fonctionnement, selon un deuxième mode de fonctionnement et selon un troisième mode de fonctionnement. Ces moyens peuvent en particulier comprendre des modules logiciels, c'est-à-dire des programmes informatiques.

Les unités logiques de traitement comprennent en outre des moyens de transition entre les différents modes de fonctionnement. Ces moyens reposent sur des tests vérifiant si des ensembles de conditions sont remplis. Ils peuvent également comprendre des modules logiciels, c'est-à-dire des programmes informatiques.

Chaque noeud comprend également une connexion à une source d'alimentation (non représentée). Le premier noeud NA est préférentiellement un noeud autonome, c'est à dire qu'il dispose de sa propre source d'alimentation (par exemple un moyen de stockage d'énergie électrique alimenté grâce à un panneau de cellules photovoltaïques). Le deuxième noeud NB n'est pas nécessairement autonome. Il peut être alimenté par le secteur. Le troisième noeud est préférentiellement également autonome, alimenté par piles. En revanche, l'invention s'applique également aux cas où l'ensemble des noeuds est autonome, ou encore aux cas où l'ensemble des noeuds est alimenté par le secteur avec un objectif de réduction de la consommation énergétique.

L'invention est basée sur le passage en différents modes de fonctionnement, en particulier d'écoute, dans les cas où un noeud autonome principalement à fonction de maître devient occasionnellement esclave.

Dans un exemple de procédé de fonctionnement selon l'invention, le premier noeud NA correspond à un capteur météorologique et envoie des informations régulièrement à l'attention d'un actionneur (correspondant au deuxième noeud NB) ou d'un point de commande (correspondant au troisième noeud NC), celui-ci mettant alors en oeuvre si nécessaire une gestion particulière de l'élément piloté. Par exemple, si le premier noeud NA signale un vent supérieur à un seuil prédéfini, l'actionneur correspondant au deuxième noeud NB fait en sorte de replier le store si celui-ci est déplié (éventuellement le point de commande correspondant au troisième noeud NC agissant en intermédiaire dans la communication, envoie une commande spécifique vers un actionneur) ou se place dans un mode dans lequel il ne répond pas à un ordre manuel de déploiement du store.

Alternativement, si le premier noeud NA est un capteur de luminosité et/ou solaire et signale un seuil de luminosité important, l'actionneur (deuxième noeud NB) contribue à déployer le store tandis qu'un autre noeud (non représenté) lié à une lampe contribue à couper l'alimentation de la lampe dont le fonctionnement n'est plus nécessaire.

De la même manière, lors d'une saisie sur l'interface homme-machine 4C du troisième noeud NC, un ordre d'exécution est émis vers l'actionneur qui adopte le comportement souhaité.

Les noeuds NA, et NC sont dits appairés avec les autres noeuds NB , c'est-à-dire qu'ils ont échangé, lors d'une phase de configuration du réseau domotique ou de l'installation domotique, des informations leur permettant par la suite de s'adresser des messages dédiés.

Les noeuds NA et NC sont des noeuds fonctionnant principalement comme maîtres (dits noeuds maîtres), c'est à dire qu'ils dirigent la communication (ils l'initient, transmettent les informations nécessaires au fonctionnement de l'installation).

Le noeud NB fonctionne lui principalement en esclave, c'est-à-dire que ce deuxième noeud NB est prêt à exécuter un certain nombre de programmes en fonction d'une information ou d'une commande reçue d'un noeud maître.

Si le deuxième noeud NB n'est pas un noeud autonome, sa partie réceptrice peut être activée suivant un schéma prédéfini de manière à également limiter la consommation du noeud mais à réagir aux messages en provenance du premier noeud NA ou du troisième noeud NC, que ceux-ci soient émis de manière régulière ou sur événement. Si l'ensemble des noeuds est autonome et en particulier ceux fonctionnant principalement en esclave, il est préférable que ceux-ci disposent de moyens appropriés pour limiter leur consommation. Ces moyens comprennent notamment des parties réceptrices basse consommation ou des gestions de réveils synchronisés avec les autres noeuds.

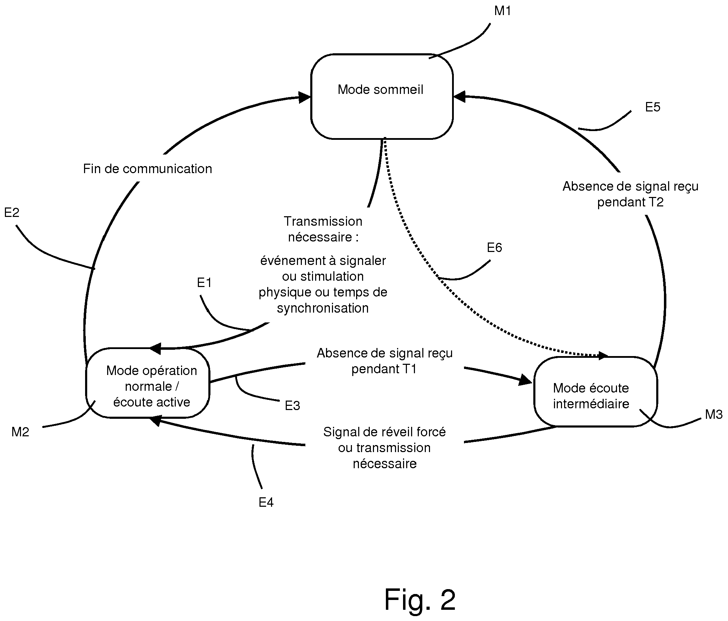

Le procédé selon l'invention permet de joindre facilement le premier noeud NA (ou de manière équivalente le troisième noeud NC) tout en diminuant la consommation requise vis-à-vis des solutions de l'état de l'art et est illustré schématiquement à la figure 2. Les raisons pour lesquelles un noeud de l'installation cherche à joindre le premier noeud NA sont principalement les suivantes : modification d'un seuil de détection, changement d'adresse, de clé commune à l'installation ou de clé de cryptage, ajout d'un nouveau noeud dans l'installation, supervision notamment pour la maintenance à distance du noeud NA.

Le premier noeud NA étant autonome et à fonctionnement principal maître, il passe la majorité de son temps dans un premier mode de fonctionnement dit mode sommeil M1, dans lequel il n'est pas joignable, c'est-à-dire dans lequel il ne peut pas échanger de données de communication avec un autre noeud à l'initiative de ce dernier.

Si le noeud NA doit transmettre une information à un deuxième noeud (par exemple NB), soit parce qu'une information doit être transmise de manière régulière, soit parce qu'un événement a été détecté, il passe dans un deuxième mode de fonctionnement dit d'opération normale M2, au cours duquel le premier noeud NA est maître de la communication et initie un échange de données. Une fois l'information transmise, le premier noeud NA reste à l'écoute active d'un message de confirmation pendant une première période prédéfinie.

Le noeud autonome passe de lui-même de l'état maître à l'état dans lequel il est en écoute active, par exemple en attente d'un message de confirmation. Le mode regroupant ces deux fonctionnements d'opération normale et d'écoute active est par la suite indifféremment dénommé « mode d'écoute active » ou « mode d'opération normale ».

Au cours de ce message de confirmation, le deuxième noeud NB peut indiquer que le premier noeud NA doit rester à l'écoute. Les rôles s'inversent alors, le deuxième noeud NB devenant maître et le premier noeud NA devenant alors esclave.

Selon un autre protocole de réveil, le premier noeud autonome NA peut comprendre un dispositif de réveil basse consommation, ce qui permet de ne réveiller complètement la partie réceptrice du noeud que lorsqu'un message pertinent lui parvient, conformément à l'état de l'art. Le premier noeud NA est alors de nouveau dans le mode d'écoute active, il traite les informations reçues dans le message pertinent et éventuellement reste à l'écoute d'autres informations.

Selon un autre protocole de réveil, le premier noeud NA bascule régulièrement dans le mode d'opération normale : il communique de manière synchronisée avec un deuxième noeud et reste à l'écoute de manière systématique pendant une période prédéfinie d'un éventuel signal.

Selon une autre alternative, le premier noeud NA peut être conduit vers un mode d'écoute active par une stimulation physique (par exemple un appui sur un bouton de commande d'une interface homme-machine du capteur).

Les différents modes de fonctionnement M1, M2 des noeuds, ainsi qu'un troisième mode de fonctionnement M3 selon l'invention sont illustrés sur la figure 2 aux sommets d'un triangle. Les étapes de passage d'un mode à l'autre sont illustrées sous forme de flèches (E1 à E6) allant d'un mode à l'autre. En particulier, les procédés permettant de joindre un noeud autonome, décrits ci-dessus, permettent de faire passer le noeud d'un mode de sommeil M1 à un mode d'écoute active M2 (étape E1). Alternativement, si le noeud décide de lui-même d'initier une communication (conformément à son fonctionnement maître), il passe également du mode de sommeil M1 à un mode d'opération normale M2 (étape E1). Pour des raisons de simplicité, ces deux modes écoute active et opération normale sont confondus sur la figure 2.

Le premier noeud NA ne peut cependant rester trop longtemps à l'écoute sans affecter très sensiblement son autonomie future.

Une fin de communication, signalée par exemple par le deuxième noeud NB, peut entraîner (étape E2) un retour direct dans le mode de sommeil M1. Alternativement, si le premier noeud n'est en attente d'aucun signal supplémentaire, il peut de lui-même décider de repasser dans le mode sommeil M1.

Selon l'invention, si le premier noeud NA en écoute active est en attente d'une information et qu'il constate l'absence de signal dans une première période de temps prédéfinie T1, il passe alors (étape E3) dans un mode d'écoute intermédiaire M3 ou mode de veille basse consommation, dans lequel il peut être joint, moyennant la réception d'un signal particulier provoquant son basculement dans le deuxième mode de fonctionnement. Ce signal particulier peut notamment être caractérisé par un effort, par exemple énergétique, supplémentaire de la part du noeud qui cherche à le joindre.

De ce mode de veille basse consommation, le premier noeud peut retourner :
- suivant une étape E4, en mode d'écoute active M2, si un signal spécifique est reçu pendant une deuxième période de temps prédéfinie T2,
- suivant une étape E5, dans le mode sommeil M1, par exemple si aucun signal n'est reçu pendant cette deuxième période T2.

Un signal spécifique est par exemple un signal de réveil forcé.

Ce procédé peut donc être utilisé dans les différents systèmes prévoyant des mécanismes de réduction de consommation en limitant les périodes d'écoute des noeuds. Il est particulièrement utile dans le cas où un noeud autonome est prévu pour avoir principalement une fonction de maître dans le réseau de noeuds. Dans ce cas, lorsqu'il passe dans l'état esclave, le noeud réagit de la manière suivante : il se réveille, mais n'attend pas si le ou les messages qu'on doit lui transmettre n'arrivent pas rapidement.

Le signal spécifique peut être un signal de fréquence différente, un signal comprenant un préambule plus long ou de puissance d'émission supérieure, ou comprenant une répétition plus importante de la trame du signal.

Une étape E6 peut être envisagée pour certains cas de réveils pour lesquels le premier noeud NA passe directement du mode sommeil M1 au mode d'écoute intermédiaire M3. Les différentes étapes pour un nouveau changement de mode prévues ci-dessus s'appliquent alors comme précédemment.

L'intérêt de cette dernière étape est notamment d'offrir une autre possibilité de gérer au mieux les ressources énergétiques de chaque noeud et de l'ensemble des noeuds, en particulier lorsque tous les noeuds devant communiquer sont autonomes.

Dans le mode d'écoute active M2, le premier noeud NA consomme plus de ressources pour être à l'écoute d'un message que dans le mode d'écoute intermédiaire M3, mais le noeud qui cherche à le joindre n'a pas d'effort énergétique supplémentaire à fournir comme cela se produit si le premier noeud NA est dans le mode d'écoute intermédiaire M3. Les paramètres de passage d'un mode à l'autre peuvent être configurés pour chaque noeud et chaque cas de communication de manière à tenir compte des besoins et ressources énergétiques du réseau domotique.

De préférence, la configuration sera choisie de sorte à minimiser la consommation du réseau tout en se conformant aux durées de vie souhaitées de chaque noeud du réseau. La différence des consommations énergétiques d'un premier noeud entre un mode d'écoute active M2 et un mode d'écoute intermédiaire M3 n'est pas nécessairement égale à l'effort énergétique supplémentaire que doit fournir un deuxième noeud pour joindre un premier noeud en mode d'écoute intermédiaire.

L'invention a un intérêt tout particulier dans le cas où le noeud autonome doit communiquer avec plusieurs autres noeuds, qui peuvent chercher à le solliciter alternativement, afin de réduire au maximum la consommation nécessaire à ces communications.

L'invention porte aussi sur un procédé de communication entre des noeuds de communication d'un réseau domotique, dans lequel au moins un des noeuds de communication fonctionne selon le procédé de fonctionnement objet de la présente demande.

Dans la présente demande, le terme « joindre » signifie « établir une communication avec » et, en particulier, « établir une communication avec un noeud pour lui envoyer un signal contenant des données ». Le terme « joignable » désigne la capacité d'un noeud à être joint par un autre noeud.

## Revendications

1. Procédé de fonctionnement d'un premier noeud (NA) de communication et d'un deuxième noeud de communication (NB, NC), d'un réseau domotique (1), le premier noeud (NA) comprenant un premier mode de fonctionnement (M1) dit de sommeil dans lequel le premier noeud n'est pas joignable et un deuxième mode de fonctionnement (M2) dit d'opération normale au cours duquel le premier noeud peut recevoir des données de communication du deuxième noeud (NB ; NC), **caractérisé en ce que** le procédé de fonctionnement du premier noeud comprend un troisième mode de fonctionnement (M3) dit d'écoute intermédiaire, dans lequel le premier noeud peut être joint moyennant la réception d'un signal particulier provoquant son basculement dans le deuxième mode de fonctionnement et **en ce que** l'émission du signal particulier par le deuxième noeud du réseau implique une plus grande consommation énergétique que l'émission d'un signal de communication vers le premier noeud lorsque celui-ci est dans le deuxième mode de fonctionnement.

2. Procédé de fonctionnement selon la revendication 1, **caractérisé en ce que** dans le deuxième mode de fonctionnement, le premier noeud est informé qu'un deuxième noeud cherche à le joindre.

3. Procédé de fonctionnement selon l'une des revendications précédentes, **caractérisé en ce que** la consommation énergétique du premier noeud dans le troisième mode de fonctionnement est inférieure à celle du premier noeud dans le deuxième mode de fonctionnement.

4. Procédé de fonctionnement selon l'une des revendications précédentes, **caractérisé en ce que** le premier noeud bascule du deuxième mode de fonctionnement au troisième mode de fonctionnement en l'absence de signal reçu pendant une première période de temps prédéfinie ou temporisation (T1).

5. Procédé de fonctionnement selon la revendication précédente, **caractérisé en ce que** la première temporisation est proportionnelle à une période de temps de communication nominale dans le deuxième mode de fonctionnement à l'issue de laquelle le premier noeud est informé qu'un autre noeud cherche à le joindre.

6. Procédé de fonctionnement selon l'une des revendications précédentes, **caractérisé en ce que** le premier noeud passe dans le troisième mode de fonctionnement sur réception d'un signal spécifique d'un autre noeud qui cherche à le joindre, le signal spécifique lui signalant un délai dans la transmission.

7. Procédé de fonctionnement selon l'une des revendications précédentes, **caractérisé en ce que** le signal particulier comprend un préambule de trame plus long ou plus puissant que celui d'un signal de communication vers le premier noeud lorsque celui-ci est dans le deuxième mode de fonctionnement.

8. Procédé de fonctionnement selon l'une des revendications précédentes, **caractérisé en ce que** le signal particulier comprend une répétition de trames plus importante que celle d'un signal de communication vers le premier noeud lorsque celui-ci est dans le deuxième mode de fonctionnement.

9. Procédé de fonctionnement selon l'une des revendications précédentes, **caractérisé en ce que**, depuis le troisième mode de fonctionnement, le premier noeud peut retourner :
- dans le premier mode de fonctionnement, notamment si aucun signal n'est reçu pendant une deuxième période de temps prédéfinie ou temporisation (T2),
- dans le deuxième mode de fonctionnement, si le signal particulier est reçu pendant la deuxième temporisation (T2).

10. Procédé de fonctionnement selon l'une des revendications précédentes, **caractérisé en ce que**, depuis le troisième mode de fonctionnement ou le premier mode de fonctionnement, le basculement du premier noeud dans le deuxième mode de fonctionnement s'effectue suite à :
- une décision du premier noeud d'émettre un signal,
- une stimulation mécanique du premier noeud,
- une stimulation électronique du premier noeud,
- la survenue d'une heure de synchronisation prédéterminée.

11. Support de données comprenant des moyens logiciels de mise en oeuvre du procédé de fonctionnement selon l'une des revendications précédentes.

12. Premier noeud (NA) et deuxième noeud (NB, NC) de communication comprenant des moyens matériels (2A, 3A, 5A) et/ou logiciels de mise en oeuvre du procédé de fonctionnement selon l'une des revendications 1 à 10.

13. Premier noeud (NA) et deuxième noeud (NB, NC) de communication selon la revendication précédente, **caractérisé en ce que** les moyens matériels comprennent une partie émettrice (3A), une partie réceptrice (4A) et une unité logique de traitement (5A).

14. Premier noeud (NA) et deuxième noeud (NB, NC) de communication selon la revendication 12 ou 13, **caractérisé en ce que** le premier noeud (NA) est autonome en énergie.

15. Réseau domotique (1) comprenant au moins un premier noeud (NA) et un deuxième noeud (NB, NC) de communication selon l'une des revendications 12 à 14.

## Patentansprüche

1. Verfahren zum Betreiben eines ersten Kommunikationsknotens (NA) und eines zweiten Kommunikationsknotens (NB, NC) eines Hausautomationsnetzes (1), wobei der erste Knoten (NA) einen ersten Betriebsmodus (M1) - "Ruhemodus" -, in dem der erste Knoten nicht erreichbar ist, und einen zweiten Betriebsmodus (M2) - "normaler Betrieb", in dem der erste Knoten Kommunikationsdaten vom zweiten Knoten (NB ; NC) empfangen kann, umfasst, **dadurch gekennzeichnet, dass** das Verfahren zum Betreiben des ersten Knotens einen dritten Betriebsmodus (M3) - "Zwischenmodus" - umfasst, in dem der erste Knoten durch den Empfang eines bestimmten Signals erreichbar ist, das dessen Übergang in den zweiten Modus auslöst, und dass das Senden des bestimmten Signals durch den zweiten Knoten des Netzes einen höheren Energieverbrauch zur Folge hat als das Senden eines Kommunikationssignals an den ersten Knoten, wenn sich dieser im zweiten Modus befindet.

2. Verfahren nach Anspruch 1, **dadurch gekennzeichnet, dass** im zweiten Modus dem ersten Knoten mitgeteilt wird, dass ein zweiter Knoten versucht, ihn zu erreichen.

3. Verfahren nach einem der vorstehenden Ansprüche, **dadurch gekennzeichnet, dass** der Energieverbrauch des ersten Knotens im dritten Modus geringer ist als der Energieverbrauch des ersten Knotens im zweiten Modus.

4. Verfahren nach einem der vorstehenden Ansprüche, **dadurch gekennzeichnet, dass** der erste Knoten vom zweiten Modus in den dritten Modus übergeht, wenn eine vorgegebene Zeit (T1) vergeht, ohne dass ein Signal empfangen wird.

5. Verfahren nach dem vorstehenden Anspruch, **dadurch gekennzeichnet, dass** die erste Zeit im Verhältnis zu einer Nenn-Kommunikationszeit im zweiten Modus steht, nach deren Ablauf dem ersten Knoten mitgeteilt wird, dass ein anderer Knoten versucht, ihn zu erreichen.

6. Verfahren nach einem der vorstehenden Ansprüche,
**dadurch gekennzeichnet, dass** der erste Knoten bei Empfang eines bestimmten Signals vom anderen Knoten, der ihn zu erreichen versucht, in den dritten Modus übergeht, wobei ihm das bestimmte Signal eine Frist vorgibt.

7. Verfahren nach einem der vorstehenden Ansprüche,
**dadurch gekennzeichnet, dass** das bestimmte Signal eine Präambel umfasst, deren Frame länger oder stärker ist als ein Kommunikationssignal an den ersten Knoten, wenn sich dieser im zweiten Modus befindet.

8. Verfahren nach einem der vorstehenden Ansprüche,
**dadurch gekennzeichnet, dass** das bestimmte Signal eine größere Frame-Wiederholung umfasst als ein Kommunikationssignal an den ersten Knoten, wenn sich dieser im zweiten Modus befindet.

9. Verfahren nach einem der vorstehenden Ansprüche,
**dadurch gekennzeichnet, dass** der erste Knoten vom dritten Modus aus zurückkehren kann:
- zum ersten Modus, und zwar insbesondere dann, wenn in einer zweiten vorgegebenen Zeit (T2) kein Signal empfangen wird,
- zum zweiten Modus, wenn das bestimmte Signal während der zweiten Zeit (T2) empfangen wird.

10. Verfahren nach einem der vorstehenden Ansprüche,
**dadurch gekennzeichnet, dass** der Übergang des ersten Knotens vom dritten Modus bzw. ersten Modus aus in den zweiten Modus im Anschluss an eines der nachfolgenden Ereignisse erfolgt:
- eine Entscheidung des ersten Knotens, ein Signal zu senden,
- eine mechanische Stimulation des ersten Knotens,
- eine elektronische Stimulation des ersten Knotens,
- das Erreichen eines vorgegebenen Synchronisierungszeitpunktes.

11. Datenträger, umfassend Software-Mittel zur Ausführung des Verfahrens nach einem der vorstehenden Ansprüche.

12. Erster Kommunikationsknoten (NA) und zweiter Kommunikationsknoten (NB, NC), umfassend Hardware- (2A, 3A, 5A) und/oder Software-Mittel zur Ausführung des Verfahrens nach einem der Ansprüche 1-10.

13. Erster Kommunikationsknoten (NA) und zweiter Kommunikationsknoten (NB, NC) nach dem vorstehenden Anspruch, **dadurch gekennzeichnet, dass** die Hardware-Mittel einen Senderteil (3A), einen Empfängerteil (4A) und eine Logik-Einheit (5A) umfassen.

14. Erster Kommunikationsknoten (NA) und zweiter Kommunikationsknoten (NB, NC) nach Anspruch 12 oder 13, **dadurch gekennzeichnet, dass** der erste Knoten (NA) über eine autonome Energieversorgung verfügt.

15. Hausautomationsnetz (1), umfassend mindestens einen ersten Kommunikationsknoten (NA) und einen zweiten Kommunikationsknoten (NB, NC) nach einem der Ansprüche 12 - 14.

## Claims

1. An operating mode for a first communication node (NA) and a second communication node (NB, NC) of a home automation network (1), the first node (NA) comprising a first operating mode (M1) called sleep mode in which the first node is not reachable, and a second operating mode (M2) called normal operation mode during which the first node can receive communication data from the second node (NB; NC), **characterized in that** the operating method of the first node comprises a third operating mode (M3) called intermediate listening mode, in which the first node can be reached subject to the reception of a particular signal causing it to switch into the second operating mode and **in that** the sending of the particular signal by the second node of the network involves a greater energy consumption than the sending of a communication signal toward the first node when the latter is in the second operating mode.

2. The operating method according to claim 1, **characterized in that** in the second operating mode, the first node is informed that a second node is trying to reach it.

3. The operating method according to one of the preceding claims, **characterized in that** the energy consumption of the first node in the third operating mode is lower than that of the first node in the second operating mode.

4. The operating method according to one of the preceding claims, **characterized in that** the first node switches from the second operating mode to the third operating mode in the absence of a signal received during a first predefined time period or time delay (T1).

5. The operating method according to the preceding claim, **characterized in that** the first time delay is proportional to a nominal communication time period in the second operating mode, at the end of which the first node is informed that another node is trying to reach it.

6. The operating method according to one of the preceding claims, **characterized in that** the first node enters the third operating mode upon receiving a specific signal from another node that is trying to reach it, the specific signal indicating a delay in the transmission to it.

7. The operating method according to one of the preceding claims, **characterized in that** the particular signal comprises a longer or more powerful frame preamble than that of a communication signal to the first node when the latter is in the second operating mode.

8. The operating method according to one of the preceding claims, **characterized in that** the particular signal comprises a greater repetition of frames than that of a communication signal toward the first node when the latter is in the second operating mode.

9. The operating method according to one of the preceding claims, **characterized in that**, from a third operating mode, the first node can return:
- into the first operating mode, in particular if no signal is received during a second predefined time period or time delay (T2),
- into the second operating mode, if the particular signal is received during the second time delay (T2).

10. The operating method according to one of the preceding claims, **characterized in that**, from the third operating mode or the first operating mode, the switching of the first node into the second operating mode is done following:
- a decision by the first node to send a signal,
- a mechanical stimulation of the first node,
- an electronic stimulation of the first node,
- the occurrence of a predetermined synchronization time.

11. A data medium comprising software means for implementing the operating method according to one of the preceding claims.

12. A first communication node (NA) and second communication node (NB, NC) comprising hardware means (2A, 3A, 5A) and/or software means for carrying out the operating method according to one of claims 1 to 10.

13. The first (NA) and second (NB, NC) communication nodes according to the preceding claim, **characterized in that** the hardware means comprise a sending part (3A), a receiving part (4A) and a processing logic unit (5A).

14. The first (NA) and second (NB, NC) communication nodes according to claim 12 or 13, **characterized in that** the first node (NA) is autonomous in energy.

15. A home automation network (1) comprising at least one first (NA) and one second (NB, NC) communication node according to one of claims 12 to 14.
